Europäisches Patentamt

(19) European Patent Office

Office européen des brevets

(11) Publication number : **0 432 923 A1**

## (12) EUROPEAN PATENT APPLICATION

(21) Application number : **90312738.9**

(22) Date of filing : **22.11.90**

(51) Int. Cl.$^5$ : **C08J 3/24, C08L 63/00, // (C08L63/00, 9:02, 75:04)**

(30) Priority : **30.11.89 US 443774**

(43) Date of publication of application :
**19.06.91 Bulletin 91/25**

(84) Designated Contracting States :
**DE GB**

(71) Applicant : **LORD CORPORATION
Thomas Lord Research Center, 405-407
Gregson Drive, P.O. Box 8225
Cary, NC 27512-8225 (US)**

(72) Inventor : **Hsich, Henry S.Y.
118 Loch Haven Lane
Cary, North Carolina 27511 (US)**

(74) Representative : **Dunlop, Brian Kenneth
Charles et al
c/o Wynne-Jones, Lainé & James 22 Rodney
Road
Cheltenham Gloucestershire GL50 1JJ (GB)**

(54) Epoxy-rubber alloy compositions.

(57) An epoxy-rubber alloy composition prepared by mixing an epoxy component and a rubber component at a temperature where the components exist as a homogenous single-phase, adding an epoxy curative and a rubber curative where the cure rate of the epoxy component is faster than the cure rate of the rubber component and where the rubber curative is utilized in an amount sufficient to pre-gel but not completely cure the rubber and then curing the mixture so as to create partial interfacial mixing between the epoxy and rubber components.

EP 0 432 923 A1

# EPOXY-RUBBER ALLOY COMPOSITIONS

This invention relates to epoxy resins modified with appropriate rubber compositions. More specifically, the present invention relates to improved epoxy-rubber alloys which exhibit reduced phase separation between the epoxy phase and the rubber phase.

Epoxy resin compositions generally exhibit excellent physical, electrical and chemical properties such as low cure shrinkage, high mechanical strength, heat resistance, dimensional stability and corrosion resistance. Epoxy resins are utilized as adhesives, coatings, molding materials and the like in applications where superior mechanical strength, heat resistance and other desirable properties are required. However, typical epoxy resin compositions are relatively brittle and lack the flexibility and toughness required for some applications.

Numerous methods and compositions have been devised in order to reduce the brittleness and increase the toughness of epoxy resin compositions. For example, U.S. Pat. No. 4,695,598 discloses an epoxy resin composition modified with a carboxyl group-containing butadiene-acrylonitrile rubber, a phenoxy resin, a metal powder, a curing component and an organic solvent. The epoxy resin composition is utilized as a coating for various articles, particularly gasohol fuel tanks.

Epoxy resins containing a discontinuous phase of dispersed grafted particles are disclosed in U.S. Pat. No. 4,778,851. The rubber particles have an insoluble rubber core and a grafted shell containing a functionalized compound which reacts under curing conditions with a functionality of the epoxy resin phase. An epoxy resin composition containing vulcanized rubber particles having a particle size of 0.5 to 30 $\mu$m are disclosed in U.S. Pat. No. 4,501,853. The rubber particles are produced by vulcanizing a dispersant of fine particles of liquid rubber incompatible with the epoxy resin.

U.S. Pat. No. 4,812,521 discloses epoxy resins modified by an effective amount of an acrylamide diene nitrile rubber terpolymer. The liquid terpolymer is reacted with the epoxy resin in the presence of acid catalysts in order to provide impact modification. U.S. Pat. No. 4,767,802 discloses an epoxy resin composition comprising a uniform mixture of an epoxy resin having fine particles of rubber adhered uniformly on the surface of the resin along with fine particles of an inorganic material. U.S. Pat. No. 4,788,233 discloses an epoxy resin composition modified by reacting the epoxy resin with a synthetic rubber in the presence of a non-ionic or anionic surfactant so as to produce a uniform and stable dispersion state of the rubber within the epoxy resin.

Current rubber modified epoxy resins are limited in mechanical strength due to the morphology in these two phase systems that results in poor particle size distribution of the rubber phase, cavitations, and stress concentrations between the rubber and epoxy phase boundary. This poor morphology is a result of separation of the rubber phase from the epoxy phase during the curing process as the epoxy phase increases in molecular weight. These morphological deficiencies can result in stability problems and inconsistent mechanical properties. A rubber modified epoxy resin is therefore needed which eliminates or significantly reduces the morphological deficiencies of current two-phase rubber modified epoxy resins.

The present invention relates to a three-step method for producing a rubber modified epoxy resin which exhibits improved morphological characteristics leading to reduced cavitations and reduced stress concentrations between the rubber and epoxy phase boundary. The first step of the present invention comprises mixing a rubber component with an epoxy resin component at a temperature where the rubber component and the epoxy component exist as a homogeneous single-phase. An epoxy curative and a rubber curative are then added to the homogeneous mixture during the second step and finally the resultant mixture is cured under appropriate conditions in the third step. It has been discovered that by properly selecting the epoxy curative and the rubber curative, the phase separation between the epoxy component and the rubber component can be retarded so as to control the morphology of the composition to create excellent interfacial mixing between the rubber phase and the epoxy phase of the composition. The improved interfacial mixing reduces morphological defects such as poor particle size distribution of the rubber phase, cavitations and stress concentrations between the phase boundary and results in compositions which exhibit excellent mechanical strength and flexibility.

It is therefore an object of the present invention to provide a rubber modified epoxy resin composition wherein morphological deficiencies such as poor particle size distribution of the rubber phase, cavitations, and stress concentrations between the rubber and epoxy phase boundary are substantially reduced.

It is another object of the present invention to provide a rubber modified epoxy composition which exhibits high mechanical strength and flexibility.

It is yet another object of the present invention to provide a rubber modified epoxy resin composition wherein improved interfacial mixing exists between the rubber phase and the epoxy phase.

Figure 1 is a phase diagram constructed through Rayleigh-Brillouin laser light scattering measurements on a mixture of epoxy (EPON 828) and a liquid carboxyl-terminated butadiene-acrylonitrile copolymer (HYCAR CTBN 1,300 × 8).

Figures 2-9 are scanning electron micrographs (× 10,000) of epoxy-rubber alloy compositions prepared in accordance with Examples 1A-4B, respectively.

The epoxy resin compositions of the present invention are prepared by mixing a rubber component with an epoxy component at a temperature where the epoxy component and the rubber component exist as a homogeneous single-phase. To the homogeneous mixture is then added a selective combination of an epoxy curative and a rubber curative. The resultant mixture is cured under appropriate conditions to produce the epoxy-rubber alloys of the present invention.

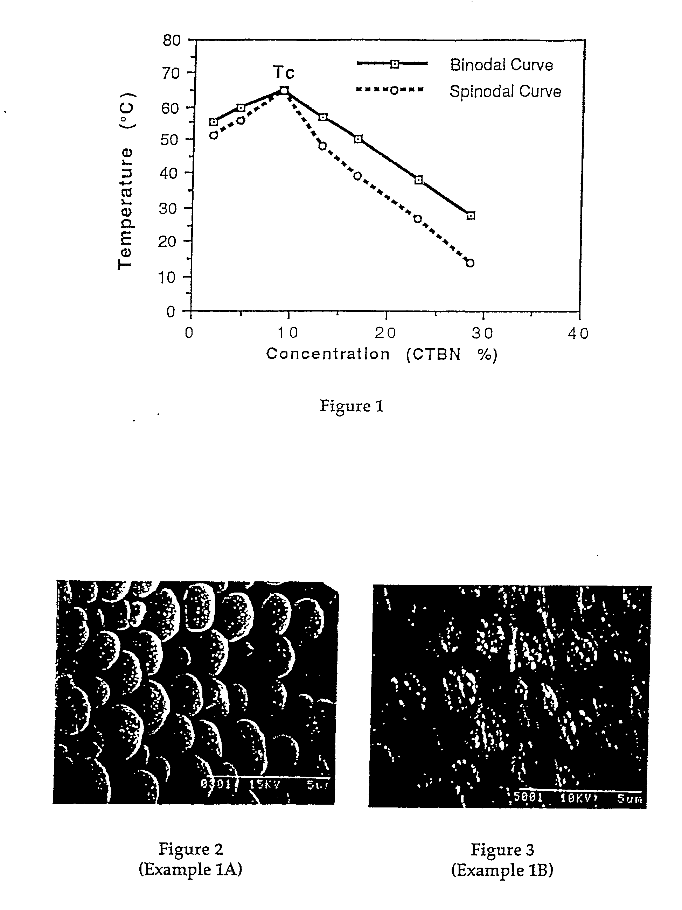

The first step of the present invention involves admixing an epoxy component with a rubber component at a temperature where the epoxy component and the rubber component exist as a single homogeneous phase. The temperatures at which the epoxy component and the rubber component exist as a single-phase (hereinafter referred to as single-phase temperatures) can be determined by various techniques known in the art. One such technique is Rayleigh-Brillouin laser light scattering. By heating and stirring the mixture, one is able to determine the point at which the mixture becomes homogeneous as indicated by light scattering measurements. The single-phase temperature of an epoxy-rubber mixture can be determined by constructing a phase diagram such as the one shown in Figure 1. Such techniques are explained in Hsich, *Phase Diagrams of Rubber-Modified Epoxies by Rayleigh-Brillouin Scattering and Thermodynamically Reversible and Irreversible Control on Morphology of Multiphase Systems*, 34th International SAMPE Symposium, Volume 34, 1989, pp. 884-893. The upper curve is known as the binodal curve and all points above this curve represent corresponding temperatures and component concentrations where the epoxy-rubber mixture exists as a single homogeneous phase. At temperatures above the upper critical solution temperature, Tc, all concentrations of epoxy and rubber will exist in the single-phase. While there are temperatures below Tc where the epoxy-rubber mixture can exist as a single-phase, one must carefully select component concentrations at such temperatures to insure homogeneity (see Figure 1).

By utilizing a phase diagram as described above, one of ordinary skill in the art can readily determine the single-phase temperature required in the first step of the invention. It should be noted that there are many temperatures at which a particular epoxy-rubber mixture may exist in a single-phase, and the term single-phase temperature is intended herein to refer to any temperature at which the epoxy-rubber mixture is homogeneous. The first step is preferably carried out at temperatures slightly above the upper critical solution temperature which can range from 20 to 150°C or higher depending on the particular components.

The epoxy component of the present invention can be any epoxy resin known in the art which can exist as a liquid at temperatures at or above room temperature. Typical epoxy resins useful in the present invention include epoxy resins derived from a di- or polyolefin polymer or copolymer, epoxy resins obtained from a copolymer of glycidyl methacrylate and a vinyl compound, epoxy resins obtained from a glyceride of a highly unsaturated aliphatic acid, bisphenol A and bisphenol F type epoxy resins, cycloaliphatic epoxy resins, hydantoin type epoxy resins, phenol and cresol novolac type epoxy resins, brominated epoxy resins, glycidyl ester type epoxy resins, polyepoxides including the polyglycidyl ethers of both polyhydric alcohols and polyhydric phenols, polyglycidyl amines, polyglycidyl amides, polyglycidyl imides, polyglycidyl hydantoins, polyglycidyl thioethers, epoxidized fatty acids or drying oils, epoxidized polyolefins, epoxidized diunsaturated acid esters, epoxidized unsaturated polyesters, and mixtures thereof. Preferred epoxy resins include low molecular weight liquid diglycidyl ethers of bisphenol-A (DGEBA) such as the one made commercially available under the name EPON 828 by The Shell Chemical Company, tetraglycidyl methylene dianiline (TGMDA) such as the one made commercially available under the name MY-720 by Ciba Geigy Corporation, phenol and cresol novolac type epoxy resins and brominated epoxy resins. The epoxy component is present in an amount from about 10 to 99 percent by weight, preferably from about 30 to 95 percent by weight of the total composition.

The rubber component can be any rubber known in the art which can exist as a liquid at or above room temperature. Typical rubber components useful in the invention include butadiene-acrylonitrile rubbers, butadiene rubbers, chloroprene rubbers, isoprene rubbers, styrene-butadiene rubbers, urethane rubbers, polysulfide rubbers and modified products of these rubbers wherein carboxyl, hydroxy and/or amino groups are introduced into one or both terminals and/or intermediate positions of the rubber chains. Commercially available products of such rubbers include Hycar CTBN (B. F. Goodrich Chemical ; liquid nitrile rubber with an acrylonitrile content of about 10-30 weight percent, an acid equivalent per 100 g of 0.07, and an average molecular weight of 3,400). Examples of Hycar CTBN are 1,300 × 8, 1,300 × 9, and 1,300 × 13. Preferred rubber components include carboxyl- and amine-terminated butadiene-acrylonitrile rubbers and polyether- and polyester-based polyurethanes. The rubber component is present in an amount from about 1 to 80 percent by weight, preferably from about 2 to 60 percent by weight of the total composition.

The epoxy component and the rubber component must be conditionally thermodynamically miscible. This means that the epoxy component and the rubber component must be capable of existing as a single homogeneous phase under at least one set of conditions. Methods for determining the temperature at which a given epoxy-rubber mixture is homogeneous have been set forth hereinabove.

The second step of the invention involves adding an epoxy curative and a rubber curative to the homogeneous epoxy-rubber mixture. The proper selection of the epoxy and rubber curatives is crucial to the second step of the invention. More specifically, the rubber curative and the epoxy curative must be selected such that the cure rate of the rubber component is less than the cure rate of the epoxy component and only a small amount of rubber curative is utilized to insure that the rubber is only partially cured during the curing step described hereinafter. The partial curing of the rubber component will herein be referred to as pre-gelling of the rubber component. Pre-gellation of the rubber component results in an increase in the molecular weight of the rubber component and thereby retards the phase separation of the rubber component from the epoxy component during the curing step.

The epoxy curative of the present invention can be any curing agent known in the art such as amines, polyamides, acid anhydrides, imidazoles, dicyandiamides, dihydrazides, urea, amidoamines and phenols or derivatives thereof. Preferred epoxy curatives for use in the present invention include polyamide types such as VERSAMID 140 produced by Henkel Company, amine types such as the difunctional polyoxypropylene-amine known as JEFFAMINE D230 produced by Texaco Chemical Company and diaminodiphenol sulfone. The epoxy curative is present in an amount from about 1 to 80 percent by weight, preferably from about 2 to 50 percent by weight of the total composition.

The rubber curative utilized in the present invention can be essentially any known in the art such as organic peroxides, sulfur or sulfur compounds, oximes and nitroso compounds. Rubber curatives derived from organic peroxides are preferred for use in the invention and examples of specific peroxides include 1,1-bis-(t-butylperoxy)-3,3,5-trimethylcyclo-hexane such as the one made commercially available under the name LUPERSOL 231 by Penwalt Corporation, dicumyl peroxide and benzoyl peroxide. As is known in the art, urethane rubbers require specific types of curatives. Preferred urethane rubber curatives include butanediol, hydroquinone-bis(betahydroxyethyl)ether, methylene bis(orthochloro-aniline) and trimethylolpropane. The rubber curative is utilized in an amount from about 0.01 percent by weight to about 10 percent by weight, preferably from about 0.05 to 4 percent by weight of the total composition.

It should be emphasized that the epoxy and rubber curatives should be selected such that the epoxy component exhibits a faster cure rate than the rubber component. Furthermore, the rubber curative must be utilized in an amount that will pre-gel but not completely cure the rubber component such that phase separation of the epoxy and rubber components will be reduced during the curing stage. It should be noted that the single-phase temperature at which the rubber and epoxy components are originally mixed may be too high for the initial addition of the curatives since the curatives may be activated too quickly. Therefore, in some situations it may be necessary to reduce the temperature of the mixture just prior to the addition of the curatives but the temperature of the mixture should never drop below the single-phase temperature for the particular epoxy/rubber combination.

Accelerators may be utilized with the epoxy curative or the rubber curative or accelerators may be utilized with both curatives simultaneously. Accelerators that may be utilized in conjunction with the epoxy curative include guanidine, urea, imidazole, imidazoline, amine and boron derivatives. Accelerators that may be utilized in conjunction with the rubber curative include thiazole, guanidine, xanthate, urea and carbamate derivatives. The amount and type of accelerator should be selected to ensure the respective cure rates of the epoxy and rubber components described above.

The third and final step of the invention involves curing the composition in order to produce the final epoxy-rubber alloy. The homogeneous epoxy-rubber mixture containing the appropriate combination of respective curatives is preferably allowed to cure at a temperature at or above the upper critical solution temperature described hereinbefore. Depending on the amounts and types of curatives (and any optional accelerators) being utilized, the curing step may be carried out at a temperature ranging from about 20 to 260°C. The time period needed for the epoxy to completely cure depends on the particular curative utilized and ranges from about 10 minutes to 24 hours. Appropriate curing temperatures and times required for various compositions will be apparent to those skilled in the art.

The following examples are presented in order to further illustrate the invention but are not intended to limit in any manner the scope of the invention.

**Example 1A.**

Epon 828 -- 200 g
CTBN(X8) -- 80 g
Jeffamine D230 -- 64 g

The Epon 828 and CTBN were mixed at 100°C under vacuum for 30 minutes until the mixture became a homogeneous single-phase. The temperature of the mixture was lowered to 70°C and the Jeffamine was added to the degassed mixture which was then cured at 120°C for two hours.

**Example 1B.**

Epon 828 -- 200 g
CTBN(X8) -- 80 g
Jeffamine D230 -- 64 g
Lupersol 231 -- 6 g
The Epon 828 and CTBN were mixed at 100°C under vacuum for 30 minutes until the mixture became a homogeneous single-phase. The temperature of the mixture was lowered to 70°C and the Jeffamine and Lupersol were added to the degassed mixture which was then cured at 120°C for two hours.

**Example 2A.**

Epon 828 -- 200 g
CTBN(X13) -- 80 g
Jeffamine D230 -- 64 g
The Epon 828 and CTBN were mixed at 100°C under vacuum for 30 minutes until the mixture became a homogeneous single-phase. The temperature of the mixture was lowered to 70°C and the Jeffamine was added to the degassed mixture which was then cured at 120°C for two hours.

**Example 2B.**

Epon 828 -- 200 g
CTBN(X13) -- 40 g
Jeffamine D230 -- 64 g
Lupersol 231 -- 6 g
The Epon 828 and CTBN were mixed at 100°C under vacuum for 30 minutes until the mixture became a homogeneous single-phase. The temperature of the mixture was lowered to 70°C and the Jeffamine and Lupersol were added to the degassed mixture which was then cured at 120°C for two hours.

**Example 3A.**

Epon 828 -- 200 g
CTBN(X8) -- 80 g
Versamid 140 -- 100 g
The Epon 828 and CTBN were mixed at 100°C under vacuum for 30 minutes until the mixture became a homogeneous single-phase. The temperature of the mixture was lowered to 70°C and the Versamid was added to the degassed mixture which was then cured at 120°C for two hours.

**Example 3B.**

Epon 828 -- 200 g
CTBN(X8) -- 80 g
Versamid 140 -- 100 g
Lupersol 231 -- 6 g
The Epon 828 and CTBN were mixed at 100°C under vacuum for 30 minutes until the mixture became a homogeneous single-phase. The temperature of the mixture was lowered to 70°C and the Versamid and Lupersol were added to the degassed mixture which was then cured at 120°C for two hours.

**Example 4A.**

Epon 828 -- 200 g
CTBN(X13) -- 80 g
Versamid 140 -- 100 g
The Epon 828 and CTBN were mixed at 100°C under vacuum for 30 minutes until the mixture became a homogeneous single-phase. The temperature of the mixture was lowered to 70°C and the Versamid was added to the degassed mixture which was then cured at 120°C for two hours.

**Example 4B.**

Epon 828 — 200 g
CTBN(X13) — 80 g
Versamid 140 — 100 g
Lupersol 231 — 6 g

The Epon 828 and CTBN were mixed at 100°C under vacuum for 30 minutes until the mixture became a homogeneous single-phase. The temperature of the mixture was lowered to 70°C and the Versamid and Lupersol were added to the degassed mixture which was then cured at 120°C for two hours.

## Table 1

### Glass Transition Temperatures (°C)

| Samples | Rubber Component | Epoxy Component |
|---|---|---|
| 1A | -51 | 81 |
| 1B | -19 | 78 |
| 2A | -32 | 81 |
| 2B | -2 | 78 |
| 3A | -51 | 106 |
| 3B | none | 102 |
| 4A | -32 | 101 |
| 4B | none | 95 |

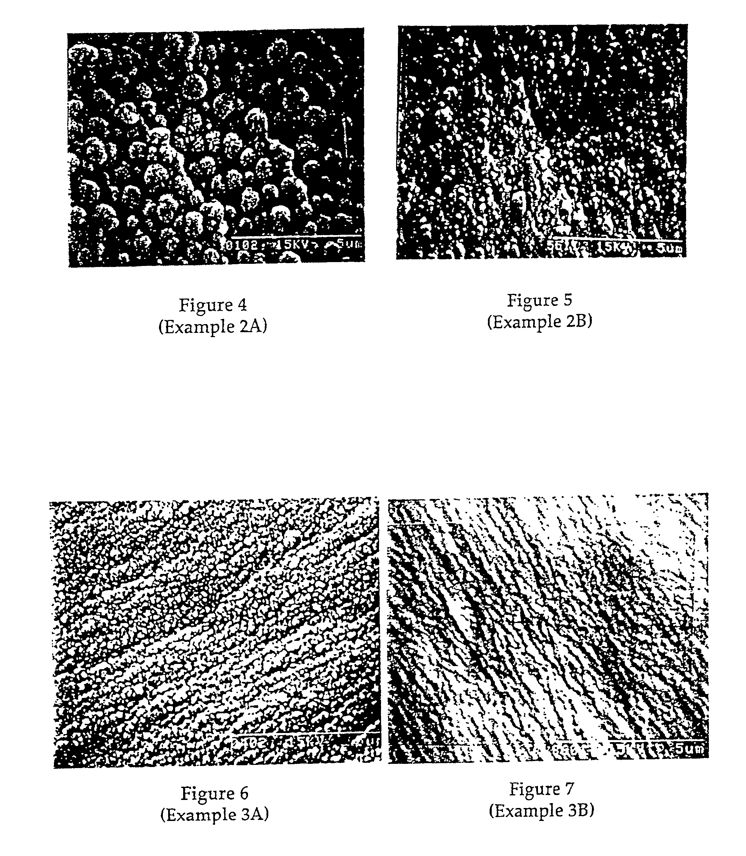

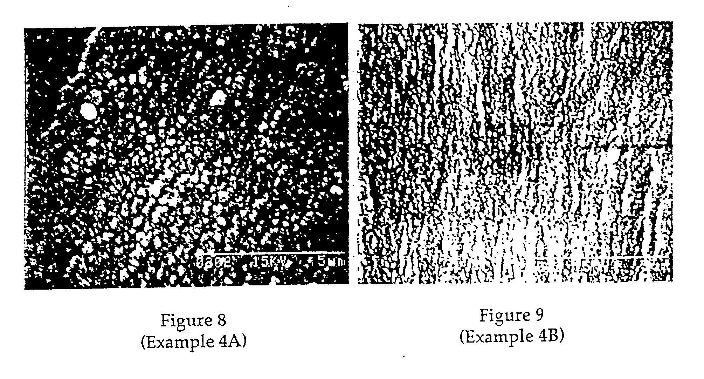

As shown in the scanning electron micrographs represented in Figures 2-9, the epoxy-rubber alloys prepared in accordance with the invention exhibit improved interfacial mixing at the epoxy and rubber phase boundary. This is apparent from the more homogeneous appearance of the compositions prepared with the pre-gelling rubber curatives (Examples 1B-4B) as compared to the compositions prepared with the epoxy curative alone (Examples 1A-4A). Further evidence of interfacial mixing is shown in Table 1 where the glass transition temperatures (Tg) of the respective rubber and epoxy components are set forth. The glass transition temperatures of the respective rubber and epoxy components were measured using a Rheometric Mechanical Spectrometer. In Examples 1B and 2B (pre-gelled), the Tg for the rubber component increased compared to Examples 1A and 2A (not pre-gelled). This is due to interfacial mixing of the rubber component with the more heat resistant (higher Tg) epoxy component in Examples 1B and 2B, which results in a rubber component having a higher Tg than the more pure rubber component of Examples 1A and 2A. In Examples 3B and 4B, the phase separation was so minimal that no separate Tg could be measured for the rubber component. The minimal phase separation exhibited in Examples 3B and 4B indicates the high degree of control over phase separation that may be obtained by the present invention.

The epoxy resin compositions of the present invention exhibit improved morphological characteristics in that particle sizes are evenly distributed, cavitations and stress concentrations between the rubber and epoxy component boundary are minimal and interfacial mixing between the epoxy and rubber components is significantly elevated. The present compositions are therefore very useful in applications requiring a high mechanical strength and a tailored set of dynamic mechanical properties.

## Claims

1. An epoxy-rubber alloy composition prepared by mixing an epoxy component and a rubber component at a single-phase temperature so as to create a homogenous mixture and curing said mixture in the presence of an epoxy curative and a rubber curative where the cure rate of the epoxy component is faster than the cure rate of the rubber component and where the rubber curative is utilized in an amount sufficient to pre-gel but not completely cure the rubber component.

2. An epoxy-rubber alloy composition according to Claim 1 wherein the epoxy component is selected from the group consisting of a low molecular weight diglycidyl ether of bisphenol-A, tetraglycidylmethylene-dianiline, tris(hydroxphenyl) methane triglycidyl ether, phenol novolac epoxy resins, cresol novolac epoxy resins and brominated epoxy resins.

3. An epoxy-rubber alloy composition according to Claim 1 or Claim 2 wherein the rubber component is selected from the group consisting of carboxyl- and amine-terminated butadiene-acrylonitrile rubbers and polyether- and polyester-based polyurethanes.

4. An epoxy-rubber alloy composition according to any one of the preceding claims wherein the epoxy curative is an amine type curative or a polyamide type curative.

5. An epoxy-rubber alloy composition according to any one of the preceding claims wherein the rubber curative is an organic peroxide.

6. A method for preparing an epoxy-rubber alloy composition comprising :
   forming a homogenous mixture of an epoxy component with a rubber component at a single phase temperature above the upper critical solution temperature ;
   adding an epoxy curative and a rubber curative to the homogenous mixture where the epoxy component has a faster cure rate than the rubber component and where the rubber curative is utilized in an amount sufficient to pre-gel but not completely cure the rubber component ;
   heating the homogenous mixture to a temperature above the upper critical solution temperature and/or maintaining that temperature for a period of time sufficient to cure the mixture such that the rubber component only partially separates from the epoxy component and results in interfacial mixing between the epoxy component and the rubber component.

7. A method for preparing an epoxy-rubber alloy composition according to Claim 6 wherein the epoxy component is selected from the group consisting of a low molecular weight diglycidyl ether of bisphenol-A, tetraglycidylmethylene-dianiline, tris(hydroxyphenyl) methane triglycidyl ether, phenol novolac epoxy resins, cresol novolac epoxy resins and brominated epoxy resins.

8. A method for preparing an epoxy-rubber alloy composition according to Claim 6 or Claim 7 wherein the rubber component is selected from the group consisting of carboxyl- and amine-terminated butadiene-acrylonitrile rubbers and polyether- and polyester-based polyurethanes.

9. A method for preparing an epoxy-rubber alloy composition according to any one of Claims 6 to 8 wherein the epoxy curative is an amine type curative or a polyamide type curative.

10. A method for preparing an epoxy-rubber alloy composition according to any one of Claims 6 to 9 wherein the rubber curative is an organic peroxide.

11. A method for preparing an epoxy-rubber alloy composition according to any one of Claims 6 to 10 wherein the epoxy component is a low molecular weight diglycidal ether of bisphenol-A present in an amount from about 95 to 30 percent by weight ; the rubber component is a carboxyl-terminated butadiene-acrylonitrile rubber present in an amount from about 2 to 60 percent by weight ; the epoxy curative is an amine type curative present in an amount from about 2 to 50 percent by weight and the rubber curative is an organic peroxide present in an amount from about 0.05 to 4 percent by weight.

12. A method for preparing an epoxy-rubber alloy composition according to Claim 11 wherein the single-phase temperature is between about 80°C and 110°C and/or wherein the homogenous mixture is heated to and maintained at a temperature of about 115°C and 135°C for about 3 hours after the addition of the epoxy curative and the rubber curative.

13. An epoxy-rubber alloy prepared by the method of any of Claims 6 to 12.

7

Figure 1

Figure 2
(Example 1A)

Figure 3
(Example 1B)

Figure 4
(Example 2A)

Figure 5
(Example 2B)

Figure 6
(Example 3A)

Figure 7
(Example 3B)

Figure 8
(Example 4A)

Figure 9
(Example 4B)

# EP 0 432 923 A1

## European Patent Office
## EUROPEAN SEARCH REPORT

Application Number

EP 90 31 2738

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 947 522 (R.R. SHELLEY, Jr. et al.) <br> * Claims * | 1 | C 08 J 3/24 <br> C 08 L 63/00 // <br> (C 08 L 63/00 <br> C 08 L 9:02 <br> C 08 L 75:04 ) |
| A | CH-A- 415 045 (KASPAR WINKLER & CO.) <br> * Claims + subclaims; page 1, line 62 - page 3, line 10 * | 1 | |
| A | GB-A-2 206 584 (THE SECRETARY OF STATE FOR DEFENCE) <br> * Claims * | 1,6 | |
| A | US-A-4 707 518 (D.N. SHAH) <br> * Claims * | 1,6 | |
| A | JOURNAL OF APPLIED POLYMER SCIENCE, vol. 34, no. 6, 5th November 1987, pages 2285-2298, Interscience Publication, John Wiley & Sons, New York, US; C. DOMENICI et al.: "Dielectric behavior of a rubber-toughened epoxy resin" <br> * Page 2285, paragraph: "Synopsis"; pages 2286,2287, paragraph: "Experimental"; page 2298, paragraph 1 * | 6 | TECHNICAL FIELDS SEARCHED (Int. Cl.5) <br><br> C 08 J <br> C 08 L |

The present search report has been drawn up for all claims

| Place of search | Date of completion of the search | Examiner |
|---|---|---|
| THE HAGUE | 21-03-1991 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)